# EUROPEAN PATENT APPLICATION

(11) **EP 4 847 780 A1**
(43) Date of publication of application: **02.12.2026**
(21) Application number: 25178812.1
(22) Date of filing: 26.05.2025
(51) Int. Cl.: F04D 1/06, F04B 15/08, F04D 7/02, B64D 37/00

(54) **CRYOGENIC PUMP FOR PUMPING A CRYOGENIC LIQUID FOR AIRCRAFT PROPULSION**

(71) Applicant: Vanzetti Engineering S.p.A, 12030 Cavallerleone (IT)
(72) Inventor: Pugliese, Francesco, Cavallerleone (IT)
(74) Representative: Bohest AG

(57) **Abstract**

The invention relates to a cryogenic pump (1) for pumping a cryogenic liquid (3) for aircraft propulsion. The cyrogenic pump (1) comprises a housing (4) comprising an inlet (6), an outlet (7) and a cryogenic liquid conveying channel (31) connecting the inlet (6) and the outlet (7). Furthermore, the cryogenic pump (1) comprises a rotatable shaft (8) supported by the housing (4), an upstream impeller (9), a downstream impeller (10), and an electric motor (11). The upstream impeller (9) and the downstream impeller (10) are connected to the rotatable shaft (8) in a torque proof manner. The electric motor (11) is arranged on the rotatable shaft (8) between the upstream impeller (9) and the downstream impeller (10) and is capable of rotating the rotatable shaft (8). The rotatable shaft (8), the upstream impeller (9) and the downstream impeller (10) are rotatable to effect pumping of the cryogenic liquid (3) through the cryogenic liquid conveying channel (31) from the inlet (6) to the outlet (7).

## Description

### FIELD OF THE INVENTION

The invention relates to a cryogenic pump for pumping a cryogenic liquid for aircraft propulsion, to an apparatus for pumping cryogenic liquid for aircraft propulsion and to an aircraft comprising a cryogenic pump and/or an apparatus with a cryogenic pump.

### BACKGROUND OF THE INVENTION

One of the primary goals of the aviation industry is to reduce emissions and develop more sustainable propulsion technologies. Liquid hydrogen (LH2) as a cryogenic liquid is a key candidate in this transition, as it can be burned in a carbon-free manner, producing only water vapor as a byproduct. By replacing conventional fossil fuels with liquid hydrogen, the aviation sector can significantly decrease its environmental impact while maintaining high performance and efficiency. Therefore, the use of liquid hydrogen (LH2) as a fuel for aircraft presents a promising alternative to conventional aviation fuels.

However, the use of liquid hydrogen (LH2) as an aircraft fuel presents significant technical challenges, as it must be transported, stored, refueled, and delivered to the engine under cryogenic conditions. With a boiling point of -253°C, LH2 requires highly specialized insulation and handling systems to prevent evaporation and ensure safe operation, making its storage and transportation considerably more complex than conventional aviation fuels. The challenges associated with handling LH2 are further detailed in the following sections.

One difficulty is the storage of LH2 in an aircraft. Hydrogen is typically stored as a gas in high-pressure tanks, where it is compressed to several hundred bar to reduce its volume. This method allows for practical storage and transport but requires heavy and reinforced tanks, which can be inefficient for aerospace applications. In contrast, storing hydrogen in its liquid state (LH2) is advantageous due to its significantly higher energy density per unit volume. By cooling hydrogen to -253°C and maintaining it in a cryogenic state, much larger amounts of fuel can be stored in a given space, making it a more viable option for aviation, where weight and volume constraints are critical factors. Given the critical importance of weight in aviation, LH2 offers a significant reduction in onboard mass due to its high energy density per unit mass, which is approximately three times higher than that of conventional aircraft fuels.

Once it is stored in the aircraft, pumping LH2 into an aircraft engine presents significant technical challenges due to its unique physical properties, which is the next difficulty. Unlike traditional cryogenic fuels such as LNG, liquid hydrogen has an extremely low density, which affects both its handling and the efficiency of the fuel delivery system. One major issue is the high susceptibility of LH2 to boil-off when heated, as its required thermal energy for vaporization is about seven times lower than that of LNG. Vaporized LH2 can lead to the formation of gas bubbles, which, when passing through a pump, can cause cavitation due to the sudden pressure changes and the presence of gas in the liquid flow. However, cavitation in pumps must be avoided as it can cause significant damage to the pump components, leading to reduced efficiency, performance degradation, and potential system failure. This would lead to a failure in supplying the aircraft engine with LH2, resulting in engine failure and ultimately causing the aircraft to crash. Therefore, cavitation and in particular the vaporization of LH2 has to be avoided when processing LH2 in an aircraft.

Furthemore low LH2 density implies that, in order to achieve the required pressure in the engine combustion chamber, the pump shall provide an extreamly hifgh head.

Hence, the low density of LH2 means that an exceptionally high pump head - over six times higher than that required for LNG - is necessary to achieve the pressure needed for combustion in the engine. To sum it up, the same differential pressure (which is required by the aircraft engine) means in case of LH2 a head six times higher compared to LNG which consequently results in a higher rotational speed of a pump impeller.

Centrifugal pumps are often used for fueling aircraft. However, in centrifugal pump design, the specific speed parameter is influenced by the relationship between flow rate, rotational speed, and the head produced by a single impeller. Since achieving the high head required for LH2 combustion necessitates a high impeller rotational speed, structural and durability constraints must be carefully considered. Given the low flow rate and high head requirements of LH2, the resulting specific speed value is naturally low. However, even when driving an impeller at the technically highest possible speed, the head required by the aircraft engine cannot be achieved. Hence, the required pump head for supplying an aircraft engine with LH2 without cavitation cannot be achieved by any known pump.

To summarize it, a dual challenge is presented: prevent vaporization which can lead to pump cavitation while also meeting the engine's stringent requirements of high pressure (and therefore a high rotational speed) combined with a relatively low flow rate. These factors make the integration of LH2 fuel systems into aircraft propulsion and in particular the supply of an aircraft engine with LH2 highly demanding and require advanced engineering solutions, which are not yet available.

### SUMMARY OF THE INVENTION

The present invention suggests a cryogenic pump for pumping a cryogenic liquid for aircraft propulsion as it is specified by the features of the independent claim. Avantageous embodiments of the cryogenic pump are subject of the corresponding dependet claims.

More specifically, the present invention suggests a cryogenic pump for pumping a cryogenic liquid for aircraft propulsion. The cryogenic pump comprises a housing comprising an inlet, an outlet and a cryogenic liquid conveying channel connecting the inlet and the outlet. Moreover, the cryogenic pump comprises a rotatable shaft supported by the housing, an upstream impeller, a downstream impeller and an electric motor. The upstream impeller and the downstream impeller are connected to the rotatable shaft in a torque proof manner. The electric motor is arranged on the rotatable shaft between the upstream impeller and the downstream impeller and is capable of rotating the rotatable shaft. The rotatable shaft, the upstream impeller and the downstream impeller are rotatable to effect pumping of the cryogenic liquid through the cryogenic liquid conveying channel from the inlet to the outlet.

It is possible that the upstream impeller comprises a first upstream stage impeller and a second upstream stage impeller. It is possible that the downstream impeller comprises a first downstream stage impeller and a second downstream stage impeller. When the upstream impeller comprises a first upstream stage impeller and a second upstream stage impeller and the downstream impeller comprises a first downstream stage impeller and a second downstream stage impeller, the cryogenic pump is equipped with four stage impellers, two in the upstream side and two in the downstream side. Having four stage impellers makes it possible to achieve the required pressure (head) at a technically feasible rotational speed of the stage impellers without causing cavitation.

It is possible that a vaned guide is arranged between the first upstream stage impeller and the second upstream stage impeller and/or between the first downstream stage impeller and the second downstream stage impeller. Integrating a vaned guide into the cryogenic pump is advantageous as it aligns the swirling flow exiting the first upstream stage impeller and/or the first downstream stage impeller into the desired direction, thereby reducing vortex losses and improving flow guidance toward the next hydraulic stage or diffuser and in conclusion, optimizing the efficiency of the cryogenic pump.

It is possible that the housing is equipped with a vaned diffuser or with a plurality of vaned diffusers. The vaned diffuser can be arranged downstream the first upstream stage impeller and/or downstream the second upstream stage impeller. It is possible that the vaned diffuser is arranged downstream the first downstream stage impeller and/or downstream the second downstream stage impeller. The cryogenic pump can have one, two, three or four vaned diffusers. A vaned diffuser converts part of the kinetic energy generated by the first upstream stage impeller respectively the second upstream stage impeller in an effective way making the cryogenic pump efficient. Vaned diffusers and/or vaned guides are stationary and fitted in the pump housing.

The cryogenic pump can be a high-pressure cryogenic pump. The high-pressure cryogenic pump generates the required pressure in an aircraft engine combustion chamber.

The electric motor is an integral part of the pump as it comprises a stator, which is equipped with windings and integrated into the pump housing, and a rotor, which is fitted on the pump shaft between the upstream impeller and the downstream impeller. The electric motor can be an asynchronous motor having two poles and three phases, designed to be controlled and speed regulated by a motor control. The electric motor can be located in the central part of the cryogenic pump. The rotor can be a squirrel cage rotor. It is possible that the electic motor is connected to the motor control with a cryogenic power cable, comprising three phases and one earth, exiting from the housing via a cryogenic duct.

It is possible that the cryogenic liquid channel divides into a plurality of sub-channels between the upstream impeller and the downstream impeller. It is possible that the cryogenic liquid channel divides into four sub-channels between the upstream impeller and the downstream impeller. It is possible that the cryogenic liquid channel is divided up into a plurality of sub-channels between the downstream impeller and the outlet. It is possible that the cryogenic liquid channel is divided up into four sub-channels between the downstream impeller and the outlet. When the cryogenic liquid channel is divided up into a plurality of sub-channels and in particular into four sub-channels between the upstream impeller and the downstream impeller or between the the downstream impeller and the outlet, the plurality of sub-channels and in particular the four sub-channels can be distributed evenly in the housing, resulting in favorable force distribution and a compact installation space of the cryogenic pump.

It is possible that the upstream impeller and/or the downstream impeller is equipped with an ogive. It is possible that the first upstream stage impeller and/or the first downstream stage impeller comprises an ogive. The ogive ensures good fluid entry to the impeller. The ogive of the upstream impeller and/or the first upstream stage impeller can be replaced by an inducer, if there is no low-pressure pump arranged upstream the inlet. The inducer gives the required NPSP (net positive suction pressure) to the upstream impeller and/or the first upstream stage impeller.

The suggested cryogenic pump has several advantages. Having an upstream and a downstream impeller and in particular a first upstream stage impeller, a second upstream stage impeller, a first downstream stage impeller and a second downstream stage impeller, ensures that the appropriate head can be achieved to feed an aircraft engine with cryogenic liquid without causing cavitation. Preventing cavitation prevents pump failure, thereby ensuring the safety of the aircraft in which the pump is installed. Moreover, this arrangement enables the reduction of cantilevered shafts, minimizing the rotodynamic effects and making the rotor of the electric motor hydraulically balanced with respect to the axial loads generated by the pressure distributions around the upstream impeller respective the downstream impeller.

The electric motor being arranged between the upstream impeller and the downstream impeller enables the electric motor, the rotatable shaft, the upstream impeller and the downstream impeller to rotate at a high rotational speed without rotodynamic problems like vibrations and premature bearings failure. Hence, the arrangement of an upstream impeller and a downstream impeller in combination with an electric motor between the upstream impeller and the downstream impeller ensures, that the aircraft engine can be provided reliably with a high head of cryogenic liquid while avoiding failure.

Additionally, heat is generated in every electric motor, which must be dissipated. The heat generated is mainly due to current passing through the motor windings (Joule heating) and to a lesser extent due to rolling frictions of the balls inside the bearings. This is particularly important in cryogenic motors, as cryogenic liquids, as mentioned earlier, evaporate rapidly. The described device with the electric motor being arranged between the upstream impeller and the downstream impeller allows that the heat is effectively dissipated and bubbles of gas cannot be captured by the suction avoiding cavitation. Hence, it makes the cryogenic pump more reliable and durable.

It is possible that the horizontal shaft is equipped with two cryogenic angular contact bearings. It is possible that the two cryogenic angular contact bearings support the rotatable shaft in the rotation and absorb the horizontal loads that may occur during maneuvers or gusts which might influence the position of the aircraft.

It is possible that the housing compsises a housing opening extending radially through a housing wall surrounding the rotatable shaft for allowing the cryogenic liquid to enter the housing from outside the housing as well as for allowing gas bubbles to escape from the housing to the outside. The housing wall also surrounds the stator of the electric motor.

It is possible that the housing comprises a plurality of housing openings. It is possible that the housing comprises eight housing openings. It is possible that four housing openings are evenly distributet at a first cross-section of the cryogenic pump. Then, there is an angle of 90 degrees between the housing openings in the first cross-section of the cryogenic pump. It is possible that four housing openings are evenly distributet at a second cross-section of the cryogenic pump. Then, there is an angle of 90 degrees between the housing openings in the second cross-section of the cryogenc pump. It is possible that the four housing openings of the first cross-section and the four housing openings of the second cross-section have the same orientation.

As mentioned above, heat is generated in every electric motor, which leads to heat that needs to be dissipated. Moreover, as explained above, cryogenic liquid is very cold. Alowing the cryogenic liquid to enter the housing from outside the housing makes it possible to cool the electric motor with cryogenic liquid which might surround the cryogenic pump in the specific installation situation. This ensures an uncomplicated cooling of the electric motor. However, as mentioned above, cryogenic liquid vaporizes easily. Hence, gas bubbles occur when the electric motor is cooled with cryogenic liquid. However, gas bubbles can cause cavitation. Hence, the housing opening and in particular the plurality of housing openings allowing gas bubbles to escape from the housing to the outside makes sure that gas bubble can escape easily and cavitation is avoided.

It is possible that there is a liquid connection between the electric motor and the cryogenic liquid conveying channel. Then, the electric motor is cooled with the cryogenic liquid which floats through the cryogenic liquid conveying channel. It is possible that the housing wall comprises a plurality of housing openings extending radially through the housing wall. This allows the gas bubbles to escape even when the aircraft tilts. The housing openings can be evenly distributed along the circumference of the housing. This allows the gas bubbles to escape the housing no matter in which position the aircraft is during the flight.

It is possible that the upstream impeller and the downstream impeller are arranged equidistantly spaced from the electric motor. It is possible that the first upstream stage impeller and the first downstream stage impeller are arranged equidistantly spaced from the electric motor. It is possible that the second upstream stage impeller and the second downstream stage impeller are arranged equidistantly spaced from the electric motor.

It is possible that the pump housing comprises static seals between different components of the housing to prevent leakages of high-pressure fluid which would decrease pump efficiency. Dynamic seals for the rotatable shaft, normally subjected to wear consumption, are not required in the above mentioned design of the pump. This allows the achievment of a longer time between overhaul. A static seal is a sealing element located between two stationary (non-moving) components, whereas a dynamic seal is positioned between a stationary component and a moving component, such as a rotatable shaft, or between two moving components.

As mentioned above, the high head of a cryogenic pump for pumping cryogenic liquid for aircraft propulsion requires a high rotational speed of the impellers, the rotatable shaft and the rotor of the electric motor. However, with a high rotational speed rotodynamic problems like vibrations and premature bearings failure occur. The upstream impeller and the downstream impeller and in particular the first upstream stage impeller and the first downstream stage impeller, or the second upstream stage impeller and the second downstream stage impeller being arranged equidistantly spaced from the electric motor makes sure that no imbalance occurs, that the electric motor is loaded symmetrically and therefore no vibrations occur and cryogenic pump failure is prevented. Hence, this arrangement avoids vibrations and premature bearing failure.

When the high rotational speed is referred to the electric motor, than the rotational parts of the electric motor (rotor) are meant. As mentioned above, the electric motor has a non-rotating stator.

It is possible, that the cryogenic pump as mentioned above is part of an apparatus for pumping liquid for aircraft propulsion. The apparatus comprises two cryogenic pumps. The first cryogenic pump is a cryogenic pump as mentioned above. However, for better understanding, the components of the "first" pump - which is the cryogenic pump as mentioned above - are labeled as "first" components, e.g. the "housing" of the cryogenic pump as mentioned above is labeled as "first" housing in the "first" cryogenic pump of the apparatus. However, they are the same components. It is possible that the second cryogenic pump has the same features with the same advantages as mentioned above for the "first" cryogenic pump.

The apparatus for pumping cryogenic liquid for aircraft propulsion comprises a first cryogenic pump and a second cryogenic pump. The first cryogenic pump is a cryogenic pump as mentioned above. The first cryogenic pump comprises a first housing. The first housing comprises a first inlet, a first outlet and a first cryogenic liquid conveying channel connecting the first inlet and the first outlet. The first cryogenic pump comprises a first rotatable shaft supported by the first housing. The first cryogenic pump comprises a first upstream impeller, a first downstream impeller and a a first electric motor. The first upstream impeller and the first downstream impeller are connected to the first rotatable shaft in a torque proof manner. The first electric motor is arranged on the first rotatable shaft between the first upstream impeller and the first downstream impeller and is capable of rotating the first rotatable shaft. The first rotatable shaft, the first upstream impeller and the first downstream impeller are rotatable to effect pumping of the cryogenic liquid through the first cryogenic liquid conveying channel from the first inlet to the first outlet.

The second cryogenic pump for pumping a cryogenic liquid for aircraft propulsion comprises a second housing. The second housing comprises a second inlet, a second outlet and a second cryogenic liquid conveying channel connecting the second inlet and the second outlet. Furthermore, the second cryogenic pump comprises a second rotatable shaft supported by the second housing, a second upstream impeller, a second downstream impeller, and a second electric motor. The second upstream impeller and the second downstream impeller are connected to the second rotatable shaft in a torque proof manner. The second electric motor is arranged on the second rotatable shaft between the second upstream impeller and the second downstream impeller and is capable of rotating the second rotatable shaft. The second rotatable shaft, the second upstream impeller and the second downstream impeller are rotatable to effect pumping of the cryogenic liquid through the second cryogenic liquid conveying channel from the second inlet to the second outlet.

The apparatus comprises a vessel. The vessel comprises an vessel inlet, an vessel outlet and an vessel interior. The first cryogenic pump and the second cryogenic pump are arranged in the vessel interior and are supported by the vessel.

The first inlet of the first cryogenic pump is fluidically connected to the vessel inlet. The second inlet of the second cryogenic pump is fluidically connected to the first outlet of the first cryogenic pump. The second outlet is fluidically connected to the vessel outlet to effect pumping of the cryogenic liquid from the vessel inlet to the vessel outlet by the first cryogenic pump and the second cryogenic pump through the first inlet, the first outlet, the second inlet and the second outlet.

The first cryogenic pump and the second cryogenic pump are high-pressure cryogenic pumps. The high-pressure cryogenic pumps generate the required pressure in an aircraft engine combustion chamber.

It is possible that the first upstream impeller comprises a first upstream stage impeller and a second upstream stage impeller. It is possible that the first downstream impeller comprises a first downstream stage impeller and a second downstream stage impeller. It is possible that the second upstream impeller comprises a third upstream stage impeller and a fourth upstream stage impeller. It is possible that the second downstream impeller comprises a third downstream stage impeller and a fourth downstream stage impeller. Then, all in all, the apparatus comprises eight stage impellers. Having eight stage impellers makes it possible to achieve the required high pressure with a high rotational speed of the impellers without causing cavitation.

The apparatus as mentioned above has several advantages. The first upstream impeller, the first downstream impeller, the second upstream impeller and the second downstream impeller ensure that overall head which is required by the aircraft engine can be archieved. Due to the number of four impellers or in particular eight stage impellers when the first upstream impeller comprises a first upstream stage impeller and a second upstream stage impeller and the first downstream impeller comprises a first downstream stage impeller and a second downstream stage impeller and the second upstream impeller comprises a third upstream stage impeller and a fourth upstream stage impeller and the second downstream impeller comprises a third downstream stage impeller and a fourth downstream stage impeller, the overall head of the apparatus can be archieved without going beyond the technical limits of the individual impellers and in particular the individual stage impellers. Every (stage) impeller archives a head which is in the technical limits of the (stage) impeller. Due to the combination of impellers and/or stage impellers, the head which is required by the aircraft engine can be archieved. Moreover, since the technical limit of each (stage) impeller is not exceeded, no cavitation occurs in the apparatus.

Since there is a first rotatable shaft and a second rotatable shaft, two impellers or in particular four stage impellers are connected to each shaft. Hence, the first rotatable shaft with the connected first upstream impeller and the connected first downstream impeller, and the second rotatable shaft with the connected second umstream impeller and the connected second downstream impeller can rotate independently, since they have no direct mechanical connection. Hence, the first rotatable shaft and the second rotatable shaft can be constructed short and therefore, roto-dynamic problems like vibrations are avoided.

To summarize it, the mentioned arrangement of four impellers or in particular eight stage impellers on two rotatable shafts enables the apparatus to provide the head required by an aircraft engine while avoiding roto-dynamic problems. Hence, this arrangement makes the apparatus highly applicable to aircraft, since it is reliable and capable of providing cryogenic liquid for an aircraft engine. Moreover, since every shaft has its own electric motor and therefore, two electric motors are provided, the power provided in the first cryogenic pump and the second cryogenic pump can be halved compared to a single electric motor being provided to rotate four impellers or eight stage impellers. Hence, the electric motors can be constructed more compact and thus, the electric motors are less subjected to roto-dynamic problems like vibrations.

During engine IDLE operations, when it is not necessary to supply the combustion chamber of the aircraft engine with high pressure, it is possible to provide also single-cryogenic-pump operation. The second cryogenic pump can be kept off and free to rotate, and is simply passed through by the liquid discharged from the first cryogenic pump. IDLE means operating or powered on but not engaged in any active or productive work.

The first cryogenic pump and the second cryogenic pump can also be installed in two different vessels, in order to have each vessel dedicated to a single cryogenic pump and to facilitate the by-pass of the second cryogenic pump, which would not be passed through by the liquid pumped by the first pump. When the second cryogenic pump is by-passed, it is possible to pump LH2 directly from the first cryogenic pump to the combustion chamber of the aircraft engine through the first cryogenic pump and the bypass. Since only one cryogenic pump is needed for IDLE operations, this is an efficient way of running an aircraft engine in IDLE operations.

It is possible that the first rotatable shaft and/or the second rotatable shaft has a maximum axial length of 320 mm. It is possible that the first rotatable shaft and the second rotatable shaft are identical, which ensures that the cryogenic pump is easy to maintain and that only a few spare part need to be kept in stock. It also prevents mix-ups during installation and ensures that the apparatus is always correctly assembled and functions properly. It is possible that the vessel is flooded with cryogenic liquid. Then, the first cryogenic pump and the second cryogenic pump are sourrounded with cryogenic liquid. Then, cryogenic liquid can enter the housing opening extending radially through the housing wall of the first cryogenic pump respective the second cryogenic pump. The cryogenic liquid reaches the first electric motor and the second electric motor and cools the first electric motor and the second electric motor. Since a heat exchange takes place between the cryogenic liquid and the first electric motor respective the second electric motor, the cryogenic liquid cools the first electric motor respective the second electric motor and the first electric motor respective the second electric motor heats the cryogenic liquid. Due to the heating of the cryogenic liquid, gas bubbles occur. Since the gas bubbles have a lower density than the cryogenic liquid surrounding the gas bubbles, the gas bubbles rise in the cryogenic liquid. Then, the gas bubbles escape from the first housing respective the second housing through the housing opening from the first housing respective the second housing. Hence, even if gas bubbles occur due to the cooling of the first electric motor respective the second electric motor with cryogenic liquid, the gas bubbles do not enter the first cryogenic liquid conveying channel or the second cryogenic liquid conveying channel. Consequently, the gas bubbles do not reach the first upstream impeller, the first downstream impeller, the second upstream impeller or the second downstream impeller. Therefore, even if the first electric motor respective the second electric motor is cooled by the cryogenic liquid, no cavitation occurs in the apparatus.

Moreover, the first cryogenic liquid conveying channel and the second cryogenic liquid conveying channel are flooded with cryogenic liquid when cryogenic liquid is provided for the aircraft engine by the apparatus. Hence, the cryogenic liquid cools the first cryogenic pump and the second cryogenic pump from outside and from inside. This reduces the heat transfer from the hotter external environment of the apparatus to the pumped cryogenic liquid in the first cryogenic liquid conveying channel and the second cryogenic liquid conveying channel. Hence, the vaporization of the cryogenic liquid in the first cryogenic liquid conveying channel and the second cryogenic liquid conveying channel is avoided and in conclusion, no cavitation occurs in the apparatus. Therefore, the apparatus is safe, reliable and durable.

It is possible that the vessel is a cryostat. It is possible that the cryostat comprises a vacuum valve for the thermal insulation from the external environment of the cryostat itself.

A cryostat is a device used to maintain low cryogenic temperaturs of liquids, samples or devices mounted within the cryostat. When the vessel is a cryostat, the heat transfer from the hotter external environment to the processed cryogenic liquid is reduced. A cryostat can also hold liquid under pressure. It is vacuum-insulated to reduce the heat transfer between its content and the external environment. It consists of an inner shell, that can withstand the pressure received by the liquid coming from the low-pressure pump, and an outer shell that can withstand the vacuum between the inner shell and the outer shell. The frontal part of the cryostat can be equipped with a double-wall cover, which is removable to allow the pumps to be extracted. Both double-wall cover and the other part of the cryostat are equipped with vacuum valves. The vacuum is created in the gap between the inner shell and the outer shell, during cryostat manufacturing, by means of a dedicated vacuum pump that can be connected to the two valves.

Hence, the same advantages as mentioned above occur. Therefore, the vessel being a cryostat ensures that no major heat differences occur in the vessel interior. Hence it ensures that the cryogenic pump is always at the same temperature as the cryogenic liquid to be pumped, even when the cryogenic pump is in stand-by condition. Therefore, a vaporization of the cryogenic liquid in the first cryogenic liquid conveying channel and the second cryogenic liquid conveying channel is avoided. In conclusion, this ensures that the cryogenic liquid does not vaporize when passing through the pump which is at the same temperature as the liquid. When the cryostat comprises a vacuum valve for evacuating the cryostat, a vacuum can be created in the cryostat by evacuating the air in the cryostat through the vacuum valve. Therefore, a vacuum pump has to be connected to the vacuum valve. One the desired vacuum level is achieved, the vacuum pump is disconnected and the vacuum valve ensures that the thermal insulation is maintained. Hence, the vacuum valve ensures that the vacuum can be easily created when necessary. Usually, the vacuum is created during the manufacturing of the cryostat.

It is possible that the vessel, the first rotatable shaft and the second rotatable shaft each have a longitudinal axis, wherein the longitudinal axes of the vessel, the first rotatable shaft and the second rotatable shaft coincide.

A longitudinal axis is the axis along the direction of the greatest extension of a body. A configuration with coincide axes ensures that the apparatus is easy to assemble and has the smallest possible installation space, which is particularly important when installing it in an airplane.

It is possible that the apparatus comprises a vent line and a vent valve. The vent valve is arranged in the vent line. The vent line is connected to a vent opening arranged in an upper portion of the vessel for venting gas from the vessel.

As mentioned above, gas bubbles might occur due to the cooling of the first electric motor respective the second electric motor with cryogenic liquid. As mentioned above, the gas bubbles escape from the first housing respective the second housing and accumulate in the upper portion of the vessel. It has to be avoided that the gas bubbles enter the first cryogenic liquid conveying channel or the second cryogenic liquid conveying channel. Hence, venting gas from an upper portion of the vessel makes is possible to vent gas from the vessel which occurs due to the cooling if the first electric motor and the second electric motor with the cryogenic liquid. Therefore, the vent line and the vent valve ensures that no gas bubbles enter the first cryogenic liquid channel or the second cryogenic liquid conveying channel and therefore, no cavitation occurs in the first cryogenic pump respective the second cryogenic pump.

It is possible that the upper portion of the vessel comprises a plurality of vent openings being connected to the vent line for venting gas from the vessel. This ensures that gas is vented relialbly from the vessel even when the airplane is tilted in flight.

It is possible that the apparatus comprises a liquid-level-control system by means of the vent valve, whose opening is metered by the liquid-level control system. Therefore, the liquid-level-control system measures the liquid level in the cryostat and controls the vent valve.

The liquid-level-control system ensures that gas which might occur in the vessel is vented from the vessel and that the cryostat is always filled with cryogenic liquid, and that the pumps are always completely submerged. Hence, the liquid-level-control system ensures that no gas enters the first cryogenic liquid channel or the second cryogenic liquid channel and consequently, no cavitation occurs in the first cryostatic pump or the second cryostatic pump. In addition, this ensures uniform cooling and heat distribution, which, as described above, ensures that not components of the apparatus warp and that the apparatus functions reliably. Moreover, when the vessel is filled with cryogenic liquid, all components are at the same temperature and there is no problem of thermal deformation of components. The liquid level control system is also useful during cryostat first-filling operation. Its controlled opening ensures that the level of LH2 rises according to a predetermined filling rate, thus preventing the entire system from being subjected to abrupt thermal shocks.

It is possible that the apparatus comprises a first motor control for controlling the rotational speed of the first electric motor and thus of the first rotatable shaft of the first cryogenic pump, and a second motor control for controlling the rotational speed of the second electricial motor and thus of the second rotatabal shaft of the second cryogenic pump. The first motor control and the second motor control are each arranged outside the cryostat. Moreover, the first motor control and the second motor control are each connected to the first cryogenic pump respectively the second cryogenic pump through a cryogenic duct. The cryogenic duct extends through the vessel. Therefore, a cryogenic cable connects the electric motor and an inner part of the cryogenic duct. The outer part of the same cryogenic duct is then connected to the motor control by an electric cable.

The connection enables the electrical power to pass from the motor control through the cryogenic duct to the electric motor inside the vessel while avoiding leaks of liquid or gas which could lead to a potentially explosive athmosphere. With the first motor control and the second motor control, the rotational speed of the first electrical motor and the second electrical motor can be controlled independently. As mentioned above, one pump can be by-passed. Then, only the electric motor of the pump which is not by-passed is running. Hence, a specific head which is required by the aircraft engine can be provided by the apparatus properly. A cryogenic duct which acts as a cryogenic electric connector enables cables to pass through the vessel prevents cryogenic liquid from escaping into the external environment.

It is possible that the apparatus comprises a cryogenic liquid tank. The cryogenic liquid tank is fluidically connected to the vessel inlet for providing cryogenic liquid from the cryogenic liquid tank to the vessel inlet. The vent line is fluidically connected to an opening arranged in an upper portion of the cryogenic liquid tank for allowing gas vented from the vessel to enter the cryogenic liquid tank.

The vent line being fluidically connected to an opening arranged in an upper portion of the cryogenic liquid tank for allowing gas vented from the vessel to enter the cryogenic liquid tank ensures that the gas which is vented from the vessel is stored properly. The gas that accumulates at the top of the vessel would increase the pressure inside the vessel. The vent line enables to vent the gas from the vessel and therefore it allows the pressure to be released. Hence, the vent line enables to vent the gas and therefore to not exceed the structural limits of the vessel.

A safety valve can be installed to protect the cryostat against accidental overpressure. This ensures that the maximum pressure the cryostat can withstand is not exceeded, thereby preventing rupture of the cryostat and enabling safe operation of an aircraft in which such a cryostat is installed.

Hence, this embodiment ensures that the apparatus is safe and reliable.

It is possible that there is an inlet valve arranged in the fluidic connection between the cryogenic liquid tank and the vessel inlet. The inlet valve is used to isolate the vessel from the cryogenic liquid tank fluidically when the first cryogenic pump and/or the second cryogenic pump have to be removed for maintenance.

The cryogenic liquid tank might be a cryostat. It is possible that the vessel and the cryogenic liquid tank are cryostats. The vessel might be a small capacity tank with a volume of approciamtely 20 liters. The vessel is used to cool the first cryogenic pump and the second cryogenic pump. The first cryogenic pump and the second cryogenic pump being arranged in the vessel and not in the cryogenic liquid tank has the advantage of being able to remove the first cryogenic pump and/or the second cryogenic pump without draining the cryogenic liquid tank. This makes pump replacement operations faster. If the first cryogenic pump and/or the second cryogenic pump would be installed in the cryogenic liquid tank, the cryogenic liquid tank would have to be completely emptied before the removal of the first cryogenic pump and/or the second cryogenic pump, which is a complicated and time consuming operation.

Potential leakages of gas bubbles from the pump housing may be collected by the cryostat and directed into the vent line. This design enhances the system's reliability and safety in the event of such leakages.

It is possible that the fluidic connection between the cryogenic liquid tank and the vessel inlet comprises a low-pressure pump arranged in a lower portion of the crogenic liquid tank for pumping cryogenic liquid from the cryogenic liquid tank to the vessel inlet.

The low-pressure pump ensures that cryogenic liquid can always be drawn by the first cryogenic pump and the second cryogenic pump, regardless of the flight-position (e.g. tilted) of the aircraft. Hence, the apparatus provides cryogenic liquid to the engine reliably. The low-pressure pump might not be necessary if the cryogenic pumps were installed close to the storage tank. In this case, the first pump will be equipped with an inducer in correspondence of the first impeller.

It is possible that the low-pressure pump is configured to provide a liquid flow-rate that is 10% - 20% higher than the flow-rate of the first cryogenic pump and the second cryogenic pump.

This ensures that cryogenic liquid can always be drawn by the first cryogenic pump and the second cryogenic pump, regardless of the flight-position (e.g. tilted) of the aircraft, even when the first cryogenic pump and the second cryogenic pump are arranged in a given distance to the cryogenic tank.

It is possible that the first cryogenic pump and the second cryogenic pump are identical.

This makes the apparatus easy to operate and maintain. Few parts need to be kept in stock for the production of the apparatus or for its maintenance.

It is possible that the first cryogenic pump and the second cryogenic pump are radially supported by self-adjusting ferrules in the vessel.

The self-adjusting ferrules are elastic and ensure coaxiality of the first cryogen pump and the second cryogen pump without any manual adjustment. Moreover, the elastic self-adjusting ferrules allow compensating the possible clearance that may occur due to the different thermal contraction between the vessel and the first housing respective the second housing.

It is possible that the above mentioned cryogenic pump and/or the above mentioned apparatus is arranged in an aircraft.

An aircraft comprising the above mentioned cryogenic pump and/or the above mentioned apparatus has the same advantage as a cryogenic pump and/or an apparatus as mentioned above.

Whenever this application refers to a cryogenic liquid, it is possible that the cryogenic liquid in question is liquid hydrogen (LH2).

### BRIEF DESCRIPTION OF THE DRAWINGS

Further advantageous aspects of the invention become apparent from the following description of exemplary embodiments of the invention with the aid of the (schematic) drawings, which are not so scale. For reasons of simplicity, only some of the components are marked with reference signs. However, the same reference signs designate the same components in all figures and even if certain components are not marked with reference signs, they are the same components that have been marked with reference signs elsewhere, unless otherwise indicated.
- Fig. 1: shows a cryogenic pump;
- Fig. 2: shows an apparatus comprising a cryogenic pump;
- Fig. 3: shows an apparatus comprising a cryogenic pump and a cryogenic liquid tank;
- Fig. 4: shows a rotatable shaft with a first upstream stage impeller, a second upstream stage impeller, a first downstream stage impeller and a second downstream stage impeller;
- Fig. 5: shows an exploded view of a first cryogenic pump;
- Fig. 6: shows an exploded view of an apparatus comprising a cryogenic pump.

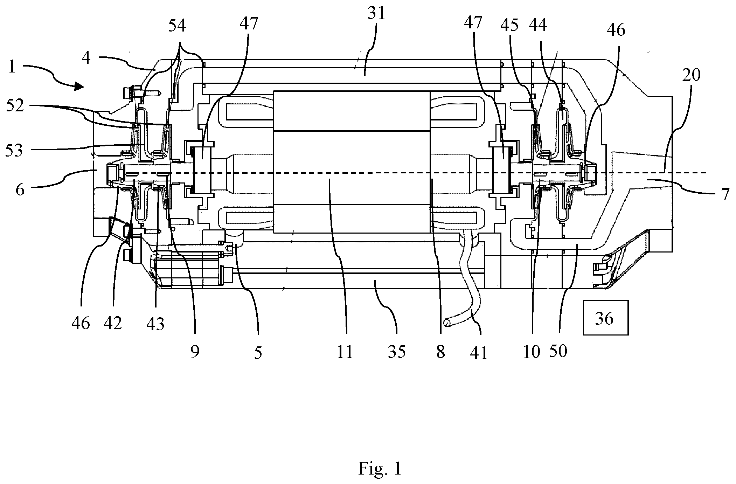

**Figure 1** shows a cryogenic pump 1. The cryogenic pump 1 comprises an inlet 6 and an outlet 7. The cryogenic liquid conveying channel 31 connects the inlet 6 and the outlet 7. The cryogenic liquid conveying channel 31 is arranged in the housing 4. The housing 4 comprises housing openings 5, extending radially through the housing wall 35 surrounding the rotatable shaft 8 for allowing the cryogenic liquid to enter the housing 4 from outside 36 the housing 4 as well as for allowing gas bubbles to escape from the housing 4 to the outside 36. The housing 4 and the rotatabal shaft 8 each have a longitudinal axis 20. The longitudinal axes 20 of the housing 4 and the rotatabal shaft 8 coincide. The rotatable shaft 8 is supported by the housing 4. The cryogenic pump 1 comprises an upstream impeller 9, a downstream impeller 10 and an electric motor 11. The upstream impeller 9 and the downstream impeller 10 are connected to the rotatable shaft 8 in a torque proof manner. The upstream impeller 9 comprises a first upstream stage impeller 42 and a second upstream stage impeller 43. The downstream impeller 10 comprises a first downstream stage impeller 44 and a second downstream stage impeller 45. The rotatable shaft 8 comprises the two bearings 47. The electric motor 11 is arranged on the rotatable shaft 8 between the upstream impeller 9 and the downstream impeller 10. The electric motor 11 is capable of rotating the rotatable shaft 8. The rotatable shaft 8, the upstream impeller 9 and the downstream impeller 10 are rotatable to effect pumping of the cryogenic liquid through the cryogenic liquid conveying channel 31 from the inlet 6 to the outlet 7. The cryogenic liquid is sucked in through the first inlet 6 and passes the first upstream stage impeller 42 and the second upstream stage impeller 43 which are part of the upstream impeller 9. Subsequently, the cryogenic liquid is moved through the four cryogenic liquid conveying channels 31 and passes the first downstream stage impeller 44 and the second downstream stage impeller 45 which are part of the downstream impeller 10. Subsequently, the cryogenic liquid passes four discharge channels 50, which are part of the cryogenic liquid conveying channel 31. Finally, the cryogenic liquid is excreted through the first outlet 7. The first upstream stage impeller 42 and the first downstream stage impeller 44 each comprise an ogive 46. Observing the first upstream stage impeller 42 and the first downstream stage impeller 44 from the respective ogive 46, the first upstream stage impeller 42 and the second upstream stage impeller 43 rotate counterclockwise while the first downstream stage impeller 44 and the second downstream stage impeller 45 rotate clockwise. The electric motor 11 is connected by the cryogenic cable 41. The components of the first housing 4 are sealed with static seals 54. The static seals 54 are arranged between static components of the first housing 4. Therefore, no dynamic seals are required in the cryogenic pump 1. Dynamic seals are subjected to wear consumption. Since no dynamic seals are required, this allows the achievement of a longer time between overhaul. The first housing 4 is equipped with vaned diffusers 52. The vaned diffusers 52 are arranged downstream the first upstream stage impeller 42 and downstream the second upstream stage impeller 43. It is possible that vaned diffusers 52 are also arranged downstream the first downstream stage impeller 44 and downstream the second downstream stage impeller 45. The vaned diffusers 52 convert part of the kinetic energy generated by the first upstream stage impeller 42 respectively the second upstream stage impeller 43. A vaned guide 53 is arranged between the first upstream stage impeller 43 and the second upstream stage impeller 43. It is possible that a vaned guide 53 is arranged between the first downstream stage impeller 44 and the second downstream stage impeller 45. Integrating a vaned guide 53 into the cryogenic pump 1 is advantageous as it aligns the swirling flow exiting the first upstream stage impeller 42 and/or the first downstream stage impeller 44 into the desired direction, thereby reducing vortex losses and improving flow guidance toward the next hydraulic stage which is the second upstream stage impeller 43 or the descond downsteam stage impeller 45 and in conclusion, optimizing the efficiency of the cryogenic pump 1.

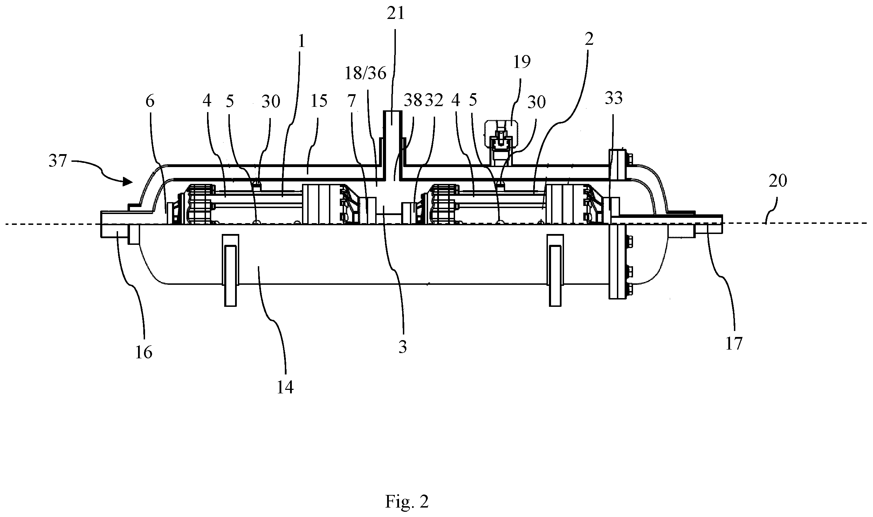

**Figure 2** shows an apparatus 37 comprising a first cryogenic pump 1 and a second cryogenic pump 2. The first cryogenic pump 1 and the second cryogenic pump 2 are identical. Therefore, the housing 4 and the housing openings 5 of the second cryogenic pump 2 are provided with the same reference signs. The first cryogenic pump 1 and the second cryogenic pump 2 are designed like the cryogenic pump 1 shown in Figure 1. Same references refer to the same components. The space 18 between the housing 4 of the first pump 1 and the second pump 2 and the vessel 14 is filled with cryogenic liquid 3. The vessel 14 comprises an vessel inlet 16, an vessel outlet 17 and a housing interior 18. The first cryogenic pump 1 and the second cryogenic pump 2 are arranged in the vessel interior 18 and are supportet by the vessel 14. The vessel interior 18 is the outside 36 of the housing 4 of the first cryogenic pump 1 and of the housing 4 of the second cryogenic pump 2. The first inlet 6 of the first cryogenic pump 1 is fluidically connected to the vessel inlet 16. The second inlet 32 of the second cryogenic pump 2 is fludically connected to the first outlet 7 of the first cryogenic pump 1. The second outlet 33 is fluidically connected to the outer vessel outlet 17. This arrangement effects pumping of the cryogenic liquid 3 from the vessel inlet 16 to the vessel outlet 17 by the first cryogenic pump 1 and the second cryogenic pump 2 through the first inlet 6, the first outlet 7, the second inlet 32 and the second outlet 33. The vessel 14 is a cryostat comprising a vacuum valve 19 for evacuating the cryostat. The vessel 14, the first rotatable shaft 8 and the second rotatable shaft 8 each have a longitudinal axis 20. The longitudinal axes 20 of the vessel 14, the first rotatable shaft 8 and the second rotatable shaft 8 coincide. The first cryogenic pump 1 and the second cryogenic pump 2 are radially supported by self-adjusting ferrules 30 in the vessel 14. The apparatus 37 comprises a vent line 21 being connected to the vent opening 38 arranged in an upper portion 15 of the vessel 14 for venting gas from the vessel 14.

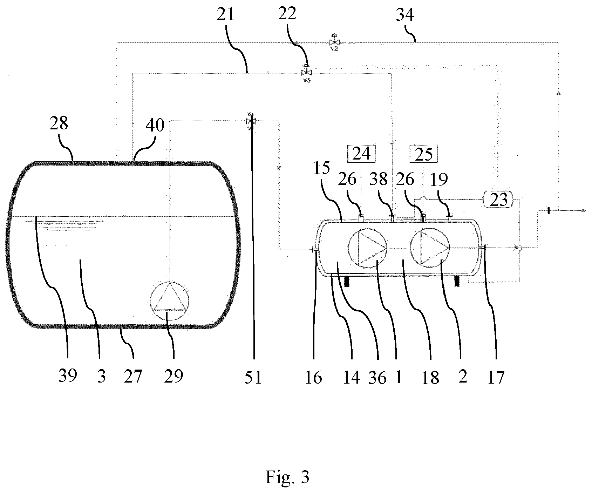

**Figure 3** shows an apparatus 37 comprising a cryogenic pump 1, 2 and a cryogenic liquid tank 27. The liquid tank 27 comprises cryogen liquid 3 up to the liquid level 39. The apparatus 37 comprises a vent line 21 and a vent valve 22 aranged in the vent line 21. The vent line 21 is connected to a vent opening 38 arranged in an upper portion 15 of the vessel 14 for venting gas from the vessel 14. The apparatus 37 comprises a liquid-level-control system 23 for measuring the liquid level 39 in the cryostat 14 and for controlling the vent valve 22. The apparatus 37 further comprises a first motor control 24 for controlling the rotational speed of the first electric motor 11 and thus of the first rotatable shaft 8 of the first cryogen pump 1. The apparatus 37 further comprises a second motor control 25 for controlling the rotational speed of the second electrical motor 11 and thus of the second rotatable shaft 8 of the second cryogenic pump 2. The first motor control 24 and the second motor control 25 are arranged outside the cryostat 14 and are each connected to the frist cryogenic pump 1 respectively the second cryogenic pump 2 through a cryogenic duct 26. The cryogenic duct 26 extends through the vessel 14. The apparatus further comprises a cryogenic liquid tank 27. The cryogenic liquid tank 27 is fluidically connected to the vessel inlet 16 for providing cryogenic liquid 3 from the cryogenic tank 27 to the vessel inlet 16. The vent line 21 is fluidically connected to an opening 40 arranged in an upper portion 28 of the cryogenic tank 27 for allowing gas vented from the vessel 14 to enter the cryogenic liquid tank 27. The fluidic connection between the cryogenic liquid tank 27 and the vessel inlet 16 comprises a low-pressure pump 29 arranged in a lower portion of the cryogenic liquid tank 27 for pumping cryogenic liquid 3 from the cryogenic liquid tank 27 to the vessel inlet 16. The vessel outlet 17 is fluidically connected with an upside 28 of the cryogenic liquid tank via the bypass 34. An inlet valve 51 is arranged in the fluidic connection between the cryogenic liquid tank 27 and the vessel inlet 16. The inlet valve 51 is used to isolate the vessel 14 from the cryogenic liquid tank 27 fluidically when the first cryogenic pump 1 and/or the second cryogenic pump 2 have to be removed for maintenance.

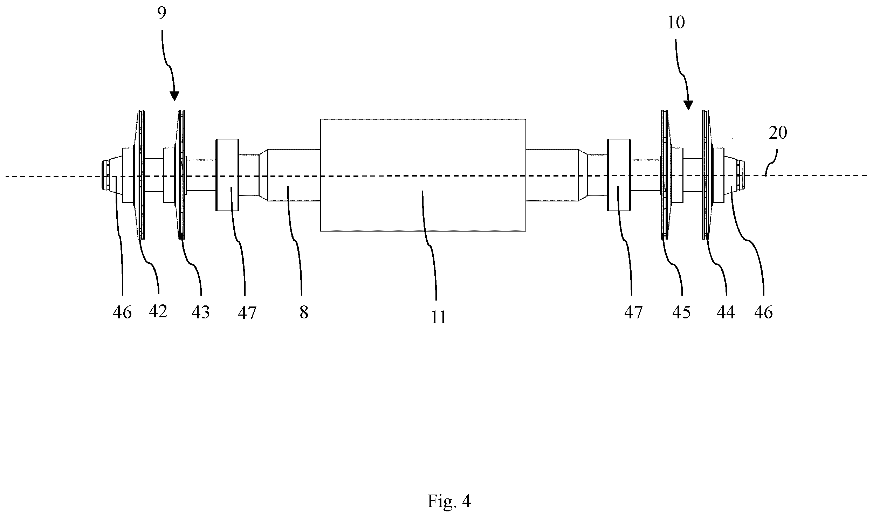

**Figure 4** shows a rotatable shaft 8 with a first upstream stage impeller 42, a second upstream stage impeller 43, a first downstream stage impeller 44 and a second downstream stage impeller 45. The first upstream stage impeller 42 and the second upstream stage impeller 43 are part of the upstream impeller 9. The first downstream stage impeller 44 and the second dornstream stage impeller 45 are part of the downstream impeller 10. The upstream impeller 9 and the downstream impeller 10 are connected to the rotatable shaft 8 in a torque proof manner. The electric motor 11 is arranged on the rotatable shaft 8 between the upstream impeller 9 and the downstream impeller 10 and is capable of rotating the rotatable shaft 8. The rotatable shaft 8 has the longitudinal axis 20. The first upstream stage impeller 42 and the first downstream stage impeller 44 comprise an ogive 46. The ogive 46 enables optimal flow conditions at the first upstream stage impeller 42 and the first downstream stage impeller 44.

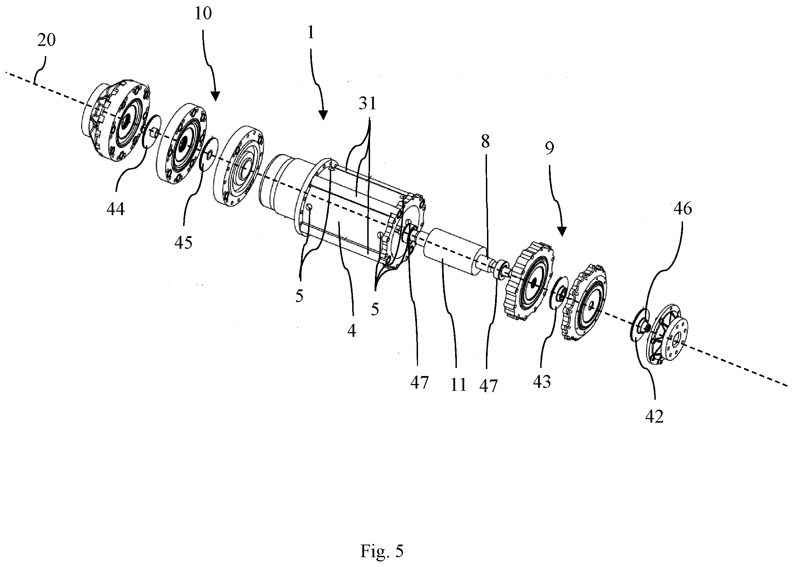

**Figure 5** shows an exploded view of a first cryogenic pump 1. The first housing 4 comprises four cryogenic liquid conveying channels 31. Furthermore, the first housing 4 comprises eight housing openings 5. The first upstream stage impeller 42 comprises an ogive 46.

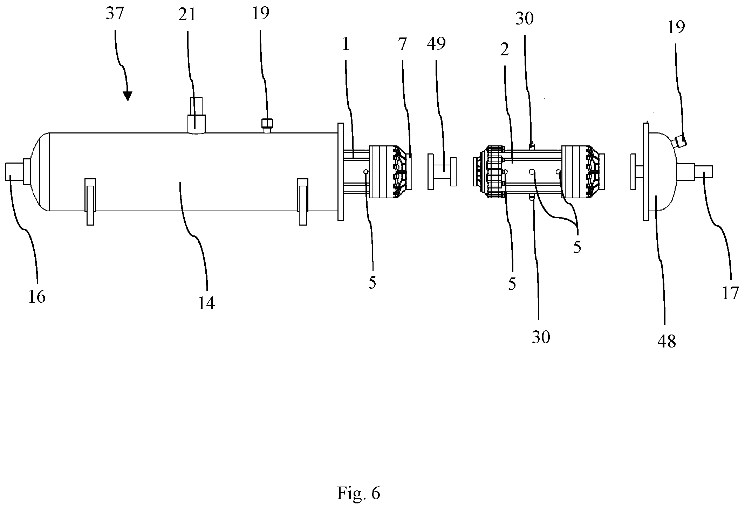

**Figure 6** shows an exploded view of an apparatus 37 comprising a first cryogenic pump 1 and a second cryogenic pump 2. The first cryogenic pump 1 and the second cryogen pump 2 are connected with the intermediate section 49. The vessel 14 comprises two vacuum valves 19. One vaccum valve 19 is part of the double wall cover 48. The first cryogenic pump 1 and the second cryogenic pump 2 can be removed axially as soon as the double wall cover 48 has been removed.

## Claims

1. Cryogenic pump (1), in particular high-pressure cryogenic pump (1), for pumping a cryogenic liquid (3) for aircraft propulsion, comprising
- a housing (4) comprising an inlet (6), an outlet (7) and a cryogenic liquid conveying channel (31) connecting the inlet (6) and the outlet (7),
- a rotatable shaft (8) supported by the housing (4),
- an upstream impeller (9), a downstream impeller (10), and an electric motor (11), wherein the upstream impeller (9) in particular comprises a first upstream stage impeller (42) and a second upstream stage impeller (43) and wherein the downstream impeller (10) in particular comprises a first downstream stage impeller (44) and a second downstream stage impeller (45), wherein the upstream impeller (9) and the downstream impeller (10) are connected to the rotatable shaft (8) in a torque proof manner, and wherein the electric motor (11) is arranged on the rotatable shaft (8) between the upstream impeller (9) and the downstream impeller (10) and is capable of rotating the rotatable shaft (8),
whereby the rotatable shaft (8), the upstream impeller (9) and the downstream impeller (10) are rotatable to effect pumping of the cryogenic liquid (3) through the cryogenic liquid conveying channel (31) from the inlet (6) to the outlet (7).

2. Cryogenic pump (1) according to claim 1, wherein the housing (4) comprises a housing opening (5) extending radially through a housing wall (35) surrounding the rotatable shaft (8) for allowing the cryogenic liquid (3) to enter the housing (4) from outside (36) the housing (4) as well as for allowing gas bubbles to escape from the housing (4) to the outside (36).

3. Cryogenic pump (1) according to any one of the preceding claims, wherein the upstream impeller (9) and the downstream impeller (10) are arranged equidistantly spaced from the electric motor (11).

4. Apparatus (37) for pumping cryogenic liquid (3) for aircraft propulsion, comprising
- A first cryogenic pump (1) according to any one of the claims 1 to 3, the first cryogenic pump (1) comprising a first housing (4) comprising a first inlet (6), a first outlet (7) and a first cryogenic liquid conveying channel (31) connecting the first inlet (6) and the first outlet (7), a first rotatable shaft (8) supported by the first housing (4), a first upstream impeller (9), a first downstream impeller (10), and a first electric motor (11), wherein the first upstream impeller (9) and the first downstream impeller (10) are connected to the first rotatable shaft (8) in a torque proof manner, and wherein the first electric motor (11) is arranged on the first rotatable shaft (8) between the first upstream impeller (9) and the first downstream impeller (10) and is capable of rotating the first rotatable shaft (8), whereby the first rotatable shaft (8), the first upstream impeller (9) and the first downstream impeller (10) are rotatable to effect pumping of the cryogenic liquid (3) through the first cryogenic liquid conveying channel (31) from the first inlet (6) to the first outlet (7), wherein the first upstream impeller (9) in particular comprises a first upstream stage impeller (42) and a second upstream stage impeller (43) and wherein the first downstream impeller (10) in particular comprises a first downstream stage impeller (44) and a second downstream stage impeller (45),
- A second cryogenic pump (2) for pumping a cryogenic liquid (3) for aircraft propulsion, comprising a second housing (4) comprising a second inlet (32), a second outlet (33) and a second cryogenic liquid conveying channel (31) connecting the second inlet (32) and the second outlet (33), a second rotatable shaft (8) supported by the second housing (4), a second upstream impeller (9), a second downstream impeller (10), and a second electric motor (11), wherein the second upstream impeller (9) and the second downstream impeller (10) are connected to the second rotatable shaft (8) in a torque proof manner, and wherein the second electric motor (11) is arranged on the second rotatable shaft (8) between the second upstream impeller (9) and the second downstream impeller (10) and is capable of rotating the second rotatable shaft (8), whereby the second rotatable shaft (8), the second upstream impeller (9) and the second downstream impeller (10) are rotatable to effect pumping of the cryogenic liquid (3) through the second cryogenic liquid conveying channel (31) from the second inlet (32) to the second outlet (33), wherein the second upstream impeller (9) in particular comprises a third upstream stage impeller and a fourth upstream stage impeller and wherein the second downstream impeller (10) in particular comprises a third downstream stage impeller and a fourth downstream stage impeller,
- A vessel (14) comprising a vessel inlet (16), a vessel outlet (17) and a vessel interior (18), wherein the first cryogenic pump (1) and the second cryogenic pump (2) are arranged in the vessel interior (18) and are supported by the vessel (14),
wherein the first inlet (6) of the first cryogenic pump (1) is fluidically connected to the vessel inlet (16), the second inlet (32) of the second cryogenic pump (2) is fluidically connected to the first outlet (7) of the first cryogenic pump (1), and wherein the second outlet (33) is fluidically connected to the vessel outlet (17), to effect pumping of the cryogenic liquid (3) from the vessel inlet (16) to the vessel outlet (17) by the first cryogenic pump (1) and the second cryogenic pump (2) through the first inlet (6), the first outlet (7), the second inlet (32) and the second outlet (33).

5. Apparatus (37) according to claim 4, wherein the vessel (14) is a cryostat, wherein the cryostat in particular comprises a vacuum valve (19) for evacuating the cryostat.

6. Apparatus (37) according to any one of the claims 4 to 5, wherein the vessel (14), the first rotatable shaft (8) and the second rotatable shaft (8) each have a longitudinal axis (20), wherein the longitudinal axes (20) of the vessel (14), the first rotatable shaft (8) and the second rotatable shaft (8) coincide.

7. Apparatus (37) according to any one of the claims 4 to 6, wherein the apparatus (37) further comprises a vent line (21) and a vent valve (22) arranged in the vent line (21), the vent line (21) being connected to a vent opening (38) arranged in an upper portion (15) of the vessel (14) for venting gas from the vessel (14).

8. Apparatus (37) according to claim 7, wherein the apparatus (37) further comprises a liquid-level-control system (23) for measuring the liquid-level (39) in the cryostat (14) and for controlling the vent valve (22).

9. Apparatus (37) according to any one of the claims 5 to 8, wherein the apparatus (37) further comprises a first motor control (24) for controlling the rotational speed of the first electric motor (11) and thus of the first rotatabal shaft (8) of the first cryogenic pump (1), and a second motor control (25) for controlling the rotational speed of the second electrical motor (11) and thus of the second rotatable shaft (8) of the second cryogenic pump (2), the first motor control (24) and the second motor control (25) each being arranged outside the cryostat (14) and each being connected to the first cryogenic pump (1) and the second cryogenic pump (2), respectively, through a cryogenic duct (26), the cryogenic duct (26) extending through the vessel (14).

10. Apparatus (37) according to any one of the claims 7 to 9, wherein the apparatus (37) further comprises a cryogenic liquid tank (27), wherein the cryogenic liquid tank (27) is fluidically connected to the vessel inlet (16) for providing cryogenic liquid (3) from the cryogenic liquid tank (27) to the vessel inlet (16), and wherein the vent line (21) is fluidically connected to an opening (40) arranged in an upper portion (28) of the cryogenic liquid tank (27) for allowing gas vented from the vessel (14) to enter the cryogenic liquid tank (27).

11. Apparatus (37) according to claim 10, wherein the fluidic connection between the cryogenic liquid tank (27) and the vessel inlet (16) comprises a low-pressure pump (29) arranged in a lower portion of the cryogenic liquid tank (27) for pumping cryogenic liquid (3) from the cryogenic liquid tank (27) to the vessel inlet (16).

12. Apparatus (37) according to claim 11, wherein the low-pressure pump (29) is configured to provide a liquid flow-rate that is 10% to 20% higher than the flow-rate of the first cryogenic pump (1) and the second cryogenic pump (2).

13. Apparatus (37) according to any one of claims 4 to 12, wherein the first cryogenic pump (1) and the second cryogenic pump (2) are identical.

14. Apparatus (37) according to any one of claims 4 to 13, wherein the first cryogenic pump (1) and the second cryogenic pump (2) are radially supported by self-adjusting ferrules (30) in the vessel (14).

15. Aircraft comprising a cryogenic pump (1) according to any one of claims 1 to 3 and/or an apparatus (37) according to any one of claims 4 to 14.
